# EUROPÄISCHE PATENTSCHRIFT

(11) **EP 1 160 468 B1**
(45) Veröffentlichungstag und Bekanntmachung des Hinweises auf die Patenterteilung: **31.03.2004**
(21) Anmeldenummer: 01112275.1
(22) Anmeldetag: 18.05.2001
(51) Int. Cl.: F16C 13/04

(54) **Gleitschuhlagerung für Drehtrommeln wie z.B. Rohrmühlen**
Sliding pad bearing for rotary drums as for example drum mills
Palier de patins à glissement pour tambours rotatifs tels que par exemple broyeurs tubulaires

(30) Priorität: 30.05.2000 DE 10026752
(43) Veröffentlichungstag der Anmeldung: 05.12.2001
(73) Patentinhaber: KHD Humboldt Wedag AG, 51105 Köln (DE)
(72) Erfinder: Dicke, Rüdiger, 51465 Bergisch Gladbach (DE); Hagedorn, Alexander, 50259 Pulheim (DE)

(56) Entgegenhaltungen:
- DE-A- 2 254 079
- DE-A- 2 849 305
- DE-A- 4 316 579
- DE-C- 340 025
- FR-A- 1 105 937
- FR-A- 1 350 226
- US-A- 4 032 199

## Beschreibung

Die Erfindung betrifft eine Lagerung für Drehtrommeln wie z. B. Rohrmühlen in Lagerstationen mit jeweils mehreren um den unteren Drehrohrumfangsbereich verteilten Gleitschuhlagerelementen, die das Drehrohr von unten abstützen.

Es ist bekannt (z. B. DE-A-43 16 579), große schwere Drehrohre wie z. B. Kugelmühlenrohre auf mehreren um den unteren Drehrohrumfang verteilt angeordneten hydrostatisch und/oder hydrodynamisch betriebenen Gleitschuhlagerelementen zu lagern, z. B. auf vier solchen Elementen, wobei das Drehrohr auf Polstern von Drucköl lastet, das in den Schmierspalt zwischen den vier Lagerschalen und der abgestützten Drehtrommel-Lauffläche gedrückt wird. Sämtliche vier Gleitschuhlagerelemente sind über Kugelgelenke und paarweise über eine relativ aufwendige gelenkige Wippenhebelkonstruktion gegen das Fundament abgestützt.

Wenn sich der radiale Abstand aller Gleitschuhlagerelemente von der Drehrohrachse nicht immer als gleich groß einstellt, ist nicht auszuschließen, dass eine Lagerstation mit mehr als zwei benachbarten Gleitschuhlagerelementen ein statisch unbestimmtes System wird. Dies gilt auch für die aus der DE-A 28 49 305 bekannte Lagerstation, bei der eine Drehtrommel in einem gurtförmigen, wenigstens die untere Drehtrommelhälfte vollständig umschlingenden Stahlband aufgehängt ist, an dessen Innenwandung z. B. fünf voneinander beabstandete Gleitlagerelemente befestigt sind, die aber nicht alle gleichmäßig belastet werden. Bei dieser bekannten Lagerung mit der über den Gurt pendelnd aufgehängten Drehtrommel ist außerdem die Gefahr nicht ausgeschlossen, dass je nach Drehzahl der gelagerten Drehtrommel das gesamte Hängelagersystem und damit auch die gelagerte Drehtrommel in unerwünschte Betriebszustände des Aufschaukelns und Schwingens geraten kann.

Der Erfindung liegt die Aufgabe zugrunde, eine Gleitschuhlagerung für schwere Drehtrommeln wie z. B. Rohrmühlen zu schaffen, die einfach und leichtgewichtig gebaut ist und bei der doch gewährleistet ist, dass alle eingesetzten Gleitschuhlagerelemente pro Lagerstation immer gleichmäßig belastet sind, ohne dass es zu Aufschaukelungen der Lagerstation kommt.

Diese Aufgabe wird erfindungsgemäß mit einer Gleitschuhlagerung mit den Merkmalen des Anspruchs 1 gelöst. Vorteilhafte Ausgestaltungen der Erfindung sind in den Unteransprüchen angegeben.

Während bei den bisher bekannten Gleitschuhlagerungen die Gewichtskräfte der gelagerten Drehtrommel überwiegend in vertikaler Richtung in das Fundament eingeleitet werden, werden in diametralem Gegensatz dazu bei der erfindungsgemäßen Gleitschuhlagerung die Gewichtskräfte der gelagerten Drehtrommel durch eine Tragseilunterstützung weitgehend in eine horizontale Richtung umgeleitet und in das Fundament abgeleitet. Pro Lagerstation ist wenigstens eines der beiden außenliegenden Gleitschuhlagerelemente unmittelbar gegen das Fundament abgestützt, während die übrigen Gleitschuhlagerelemente der Lagerstation auf einem Tragseil abgestützt sind in der Weise, dass diese übrigen Gleitschuhlagerelemente am Tragseil fixiert sind. Das auf Zug beanspruchte Tragseil ist in der Lage, hohe Zugkräfte und damit hohe Lagerkräfte aufzunehmen und zu übertragen. Dieses Tragseil mit den fixierten Gleitschuhlagerelementen ist an einem Ende über einen festen Lagerbock am Fundament verankert und es ist vermittels einer Spanneinrichtung über das andere Tragseilende nachspannbar. Wenigstens bei den beiden außenliegenden Gleitschuhlagerelementen sind die das Drehrohr von unten abstützenden Lagerschalen jeweils über eine Kugelkalotte am jeweiligen unteren Abstützteil der Gleitschuhlagerelemente abgestützt.

Bei der erfindungsgemäßen Gleitschuhlagerung mit Tragseilunterstützung bildet also das Tragseil mit den daran fixierten Gleitschuhlagerelementen eine Art Seilkette bzw. Gliederkette mit allen Freiheitsgraden. Die zwischen den benachbarten Gleitschuhlagerelementen befindlichen Seilabschnitte lassen sich innerhalb bestimmter Grenzen verdrehen bzw. verdrillen und auch anderweitig verformen, so dass sich alle, z. B. alle vier um den unteren Drehrohrumfangsbereich verteilten Gleitschuhlagerelemente, also z. B. vier hydrodynamische Gleitlager völlig selbsttätig immer so einstellen, dass der radiale Abstand aller vier Lagerschalen von der Drehachse des gelagerten Drehrohrmantels selbst bei Durchbiegungen, Formänderungen oder Änderungen des Neigungswinkels des gelagerten Drehrohres immer gleich groß ist, so dass alle Gleitschuhlagerelemente, statisch bestimmt, völlig gleich belastet werden, ohne dass dazu aufwendige Regel- und Steuerungssysteme notwendig wären.

Infolge der erfindungsgemäßen Tragseilunterstützung genügt es, dass nur bei den beiden außenliegenden Gleitschuhlagerelementen die das Drehrohr von unten abstützenden Lagerschalen jeweils über eine Kugelkalotte am jeweiligen unteren Abstützteil der Gleitschuhlagerelemente abgestützt sind, während bei den dazwischen liegenden, d. h. bei den im mittleren Bereich liegenden Gleitschuhlagerelementen die Lagerschalen nicht unbedingt mit einem Kugelgelenk ausgestattet sein müssen, weil ja das Tragseil die Gelenkfunktion übernimmt in dem Falle, dass sich der Neigungswinkel des gelagerten Drehrohrmantels gegenüber der Horizontalen ändert und/oder dass sich der Drehrohrmantel während seiner Drehung um bestimmte Größen durchbiegen oder sonst wie verformen sollte. Dadurch, dass pro Lagerstation wenigstens eines der beiden außen liegenden Gleitschuhlagerelemente unmittelbar gegen das Fundament abgestützt ist, wird ein Aufschaukeln und Schwingen bei der erfindungsgemäßen Gleitschuhlagerung verhindert. Die erfindungsgemäße Gleitschuhlagerung mit Tragseilunterstützung erzielt alle diese Vorteile und sie ist dabei noch vergleichsweise leichtgewichtig gebaut und kostengünstig herstellbar. Außerdem ermöglicht die erfindungsgemäße tragseilunterstützte Gleitschuhlagerung eine einfache und schnelle Höhenverstellung der gelagerten Drehtrommel, und die Lagergehäuseabdichtung ist einfach zu gestalten.

Nach einem vorteilhaften Merkmal der Erfindung können die am Tragseil fixierten Abstützteile der ggf. kugelgelenkig angeordneten Lagerschalen der Gleitschuhlagerelemente durch eine Klemmblockverbindung auf dem Tragseil befestigt sein. Die pro Lagerstation um den unteren Drehrohrumfangsbereich verteilt angeordneten Gleitschuhlagerelemente können aber auch wie bei einer Gliederkette über Tragseilabschnitte miteinander gelenkig verbunden sein.

Nach einem weiteren Merkmal der Erfindung kann die am freien Tragseilende angreifende Einrichtung zum Spannen bzw. Nachspannen des Tragseiles aus einer das freie Tragseilende haltenden Schwinge bestehen, die über ein Gelenk mit etwa parallel zum gelagerten Drehrohr liegender Gelenkachse gegen das Fundament abgestützt ist.

Die Erfindung und deren weitere Merkmale und Vorteile werden anhand der in den Figuren schematisch dargestellten Ausführungsbeispiele näher erläutert.

Es zeigt:
- Fig. 1:: im Querschnitt den unteren Umfangsbereich eines großen schweren Drehrohres wie z. B. einer Rohrmühle, mit beispielsweise vier Gleitschuhlagerelementen zur Aufnahme der Radiallast an einer Lagerstation des Drehrohres,
- Fig. 2:: den Schnitt längs der Linie B-B der Figur 1 bzw. Figur 3, und
- Fig. 3:: die Gleitschuhlagerung mit Tragseilunterstützung der Figur 1 mit einer Variante der am rechten Tragseilende angreifenden Spanneinrichtung.

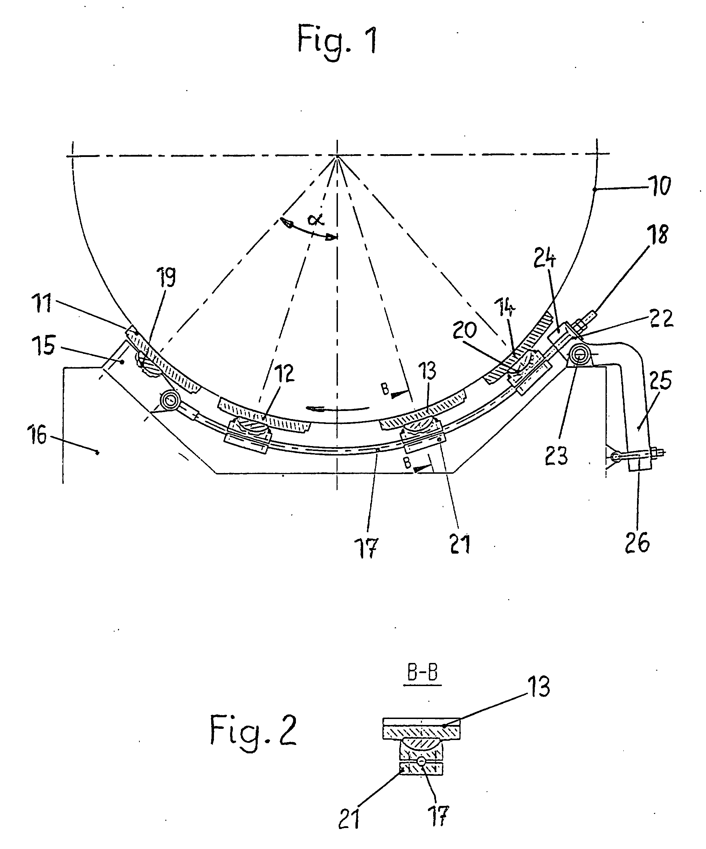

Nach Figur 1 ist der Mantel 10 einer Rohrmühle, die sich im Ausführungsbeispiel im Uhrzeigersinn dreht, an einer Lagerstation auf vier um den Mantelumfang verteilten Gleitschuhlagerelementen 11, 12, 13, 14 radial abgestützt, die hydrodynamische Gleitlager sind, deren mit Drucköl gefüllten Lagerschalen der Außenkontur des Drehrohrmantels 10 angepasst sind.

Damit sich die Gleitschuhlagerelemente 11, 12, 13, 14 selbsttätig immer so einstellen, dass der radiale Abstand der Gleitlagerschalen von der Drehachse des Drehrohrmantels 10 immer gleich groß ist, ist pro Lagerstation wenigstens eines der beiden außen liegenden Gleitschuhlagerelemente, in Figur 1 das linke Gleitschuhlagerelement 11, über den Führungsbock 15 unmittelbar gegen das Fundament 16 abgestützt, während die übrigen Gleitschuhlagerelemente 12, 13, 14 der Lagerstation auf einem Tragseil 17 abgestützt sind in der Weise, dass diese Gleitschuhlagerelemente am Tragseil 17 fixiert sind. Das Tragseil mit den fixierten Gleitschuhlagerelementen 12 bis 14 ist an seinem linken Ende am festen Führungsbock 15 des Fundaments 16 verankert und es ist vermittels einer Spanneinrichtung über das andere Tragseilende 18 nachspannbar. Der Winkel α zwischen dem jeweils außen liegenden Gleitschuhlagerelement und der Vertikalen durch die Drehrohrachse sollte 45° nicht überschreiten. Statt der im zeichnerischen Ausführungsbeispiel dargestellten vier Gleitschuhlagerelemente wären auch beliebig viele Elemente möglich.

Wenigstens bei den beiden außen liegenden Gleitschuhlagerelementen 11 und 14 sind die das Drehrohr 10 von unten abstützenden Lagerschalen jeweils über eine Kugelkalotte 19 bzw. 20 am jeweiligen unteren Abstützteil der Gleitschuhlagerelemente kugelgelenkig abgestützt. Damit können sämtliche Gleitlagerschalen, vermittels des Tragseils 17 auch diejenigen der mittleren Gleitschuhlagerelemente 12 und 13, alle Bewegungen des Drehrohrmantels 10 mitmachen auch in dem Falle, dass sich der Neigungswinkel des Drehrohrmantels gegenüber der Horizontalen ändert und/oder dass sich der Drehrohrmantel während seiner Drehung um bestimmte Größen durchbiegen oder sonst wie verformen sollte. Wie in den Figuren gezeigt, können aber auch bei den mittleren Gleitschuhlagerelementen 12, 13 die Lagerschalen zusätzlich zu ihrer über das Tragseil 17 erlangten Gelenkigkeit noch Kugelkalotten aufweisen, müssen aber nicht.

In der Figur 2 ist gut erkennbar, dass die am Tragseil 17 fixierten unteren Abstützteile der Lagerschalen der Gleitschuhlagerelemente 12 bis 14 durch eine Klemmblockverbindung 21 auf dem Tragseil 17 befestigt sein können. Die benachbarten Gleitschuhlagerelemente bzw. deren untere Abstützteile können aber auch gliederkettenartig durch einzelne Tragseilabschnitte miteinander gelenkig verbunden sein.

Die Einrichtung 22 zum Spannen bzw. Nachspannen des Tragseiles 17 kann aus einer das freie Tragseilende 18 haltenden Schwinge bestehen, die über ein Gelenk 23 mit etwa parallel zum gelagerten Drehrohr 10 liegender Gelenkachse gegen das Fundament 16 abgestützt ist. Nach Figur 1 besteht diese Schwinge aus einem zweiarmigen Hebel, dessen kurzer Hebelarm 24 über eine Gelenkverbindung am freien Tragseilende 18 angreift und an dessen langem Hebelarm 25 eine Stelleinrichtung 26 wie Hydraulikschwenkzylinder, Spindeltrieb etc. angreift.

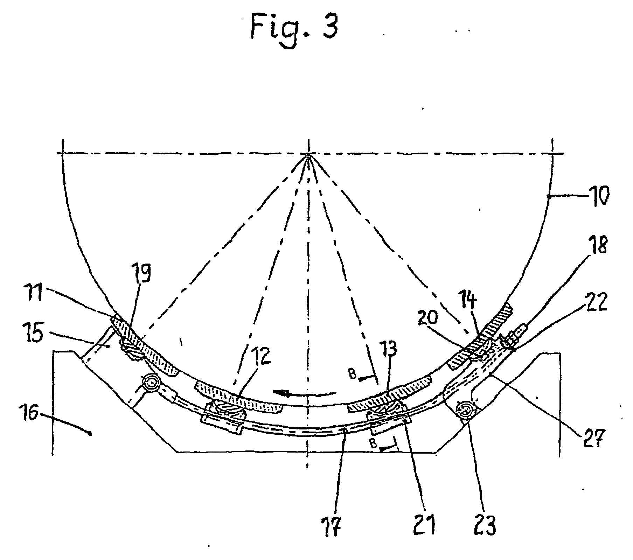

Als Variante zu Figur 1 besteht nach dem Ausführungsbeispiel der Figur 3 die Schwinge zum Halten und Nachspannen des freien Tragseilendes 18 aus einem einarmigen Hebel, auf dessen Hebelarm 27 das außen liegende Gleitschuhlagerelement 14 gelenkig abgestützt ist. Über den vom Drehrohr 10 gewichtsbelasteten Hebelarm 27 erfolgt eine selbsttätige Nachspannung des Tragseiles 17.

Das Tragseil 17 kann aus einem Bündel von Seilen kleineren Durchmessers und/oder aus einer Gliederkette und/oder aus Zugstangenabschnitten bestehen, solange das Tragseilsystem in bestimmten Grenzen verdrillfähig und flexibel nachgiebig ist, um die o. g. Ziele und Vorteile der erfindungsgemäßen Gleitschuhlagerung zu erreichen.

## Patentansprüche

1. Lagerung für Drehtrommeln wie z. B. Rohrmühlen in Lagerstationen mit jeweils mehreren um den unteren Drehrohrumfangsbereich verteilten Gleitschuhlagerelementen (11 bis 14), die das Drehrohr (10) von unten abstützen,
**gekennzeichnet durch** folgende Merkmale,
a) pro Lagerstation ist wenigstens eines der beiden außen liegenden Gleitschuhlagerelemente (11) unmittelbar gegen das Fundament (16) abgestützt,
b) die übrigen Gleitschuhlagerelemente (12, 13, 14) der Lagerstation sind auf einem Tragseil (17) abgestützt in der Weise, dass diese Gleitschuhlagerelemente am Tragseil (17) fixiert sind,
c) das Tragseil (17) mit den fixierten Gleitschuhlagerelementen (12 bis 14) ist an einem Ende über einen festen Lagerbock (15) am Fundament (16) verankert und es ist vermittels einer Spanneinrichtung über das andere Tragseilende (18) nachspannbar,
d) wenigstens bei den beiden außen liegenden Gleitschuhlagerelementen (11 und 14) sind die das Drehrohr (19) von unten abstützenden Lagerschalen jeweils über eine Kugelkalotte (19 bzw. 20) am jeweiligen unteren Abstützteil der Gleitschuhlagerelemente abgestützt.

2. Lagerung nach Anspruch 1,
**dadurch gekennzeichnet, dass** die am Tragseil (17) fixierten Abstützteile der Lagerschalen der Gleitschuhlagerelemente (12 bis 14) durch eine Klemmblockverbindung (21) auf dem Tragseil (17) befestigt sind.

3. Lagerung nach Anspruch 1,
**dadurch gekennzeichnet, dass** die pro Lagerstation um den unteren Drehrohrumfangsbereich verteilt angeordneten Gleitschuhlagerelemente bzw. deren Abstützteile über Tragseilabschnitte miteinander verbunden sind.

4. Lagerung nach Anspruch 1,
**dadurch gekennzeichnet, dass** die Einrichtung (22) zum Spannen bzw. Nachspannen des Tragseiles (17) aus einer das freie Tragseilende (18) haltenden Schwinge besteht, die über ein Gelenk (23) mit etwa parallel zum gelagerten Drehrohr (10) liegender Gelenkachse gegen das Fundament (16) abgestützt ist.

5. Lagerung nach Anspruch 4,
**dadurch gekennzeichnet, dass** die Schwinge zum Halten und Nachspannen des freien Tragseilendes (18) aus einem zweiarmigen Hebel besteht, dessen kurzer Hebelarm (24) am freien Tragseilende (18) angreift und an dessen langem Hebelarm (25) eine Stelleinrichtung (26) wie Hydraulikschwenkzylinder etc. angreift.

6. Lagerung nach Anspruch 4,
**dadurch gekennzeichnet, dass** die Schwinge zum Halten und Nachspannen des freien Tragseilendes (18) aus einem einarmigen Hebel besteht, auf dessen Hebelarm (27) das außen liegende Gleitschuhlagerelement (14) abgestützt ist.

7. Lagerung nach einem oder mehreren der Ansprüche 1 bis 6,
**dadurch gekennzeichnet, dass** das Tragseil (17) aus einem Bündel von Seilen kleineren Durchmessers und/oder aus einer Gliederkette und/oder aus Zugstangenabschnitten besteht.

## Claims

1. Bearing arrangement for rotary drums, such as, for example, drum mills, in bearing stations, having in each case a plurality of sliding-pad bearing elements (11 to 14) which are distributed about the bottom rotary-drum circumferential region and support the rotary drum (10) from below, **characterized by** the following features
a) per bearing station, at least one of the two outer sliding-pad bearing elements (11) is directly supported against the foundation (16),
b) the remaining sliding-pad bearing elements (12, 13, 14) of the bearing station are supported on a carrying cable (17) in such a way that these sliding-pad bearing elements are fixed to the carrying cable (17),
c) the carrying cable (17) with the fixed sliding-pad bearing elements (12 to 14) is anchored to the foundation (16) at one end via a fixed bearing block (15) and it can be re-tensioned by means of a tensioning device via the other carrying-cable end (18),
d) at least at the two outer sliding-pad bearing elements (11 and 14), the bearing shells supporting the rotary drum (19) from below are each supported via a spherical cup (19 or 20, resp.) at the respective bottom supporting part of the sliding-pad bearing elements.

2. Bearing arrangement according to Claim 1, **characterized in that** the supporting parts, fixed to the carrying cable (17), of the bearing shells of the sliding-pad bearing elements (12 to 14) are fastened to the carrying cable (17) by means of a clamping-block connection (21).

3. Bearing arrangement according to Claim 1, **characterized in that** the sliding-pad bearing elements, arranged in a distributed manner per bearing station around the bottom rotary-drum circumferential region, or their supporting parts are connected to one another via carrying-cable sections.

4. Bearing arrangement according to Claim 1, **characterized in that** the device (22) for tensioning or re-tensioning the carrying cable (17) consists of a rocker which holds the free carrying-cable end (18) and is supported against the foundation (16) via an articulation (23) having an articulation axis lying approximately parallel to the mounted rotary tube (10).

5. Bearing arrangement according to Claim 4, **characterized in that** the rocker for holding and re-tensioning the free carrying-cable end (18) consists of a two-armed lever, the short lever arm (24) of which acts on the free carrying-cable end (18), and on the long lever arm (25) of which an adjusting device (26) such as a hydraulic swivel cylinder, etc., acts.

6. Bearing arrangement according to Claim 4, **characterized in that** the rocker for holding and re-tensioning the free carrying-cable end (18) consists of a one-armed lever, on the lever arm (27) of which the outer sliding-pad bearing element (14) is supported.

7. Bearing arrangement according to one or more of Claims 1 to 6, **characterized in that** the carrying cable (17) consists of a bundle of cables of relatively small diameter and/or of a link chain and/or of tie rod sections.

## Revendications

1. Support pour tambours rotatifs tels que par exemple des broyeurs tubulaires dans des postes de support comprenant à chaque fois plusieurs éléments de support de patin à glissement (11 à 14) répartis sur la région inférieure de la périphérie du tube rotatif, qui supportent le tube rotatif (10) par le dessous,
**caractérisé par** les caractéristiques suivantes :
a) pour chaque poste de support, au moins l'un des deux éléments de support de patin à glissement (11) se trouvant à l'extérieur est supporté directement contre la base (16),
b) les éléments de support de patin à glissement restants (12, 13, 14) du poste de support sont supportés sur un câble porteur (17) de telle manière que ces éléments de support de patin à glissement soient fixés sur le câble porteur (17),
c) le câble porteur (17) avec les éléments de support de patin à glissement (12 à 14) est ancré à une extrémité sur la base (16) par le biais d'un bloc-palier fixe (15) et peut être tendu ultérieurement au moyen d'un dispositif de tensionnement par le biais de l'autre extrémité du câble porteur (18),
d) au moins dans les deux éléments de support de patin à glissement se trouvant à l'extérieur (11 et 14), les coquilles de palier supportant par le dessous le tube rotatif (19) sont à chaque fois supportées par une calotte sphérique (19, respectivement 20) sur la partie de support inférieure respective des éléments de support de patin à glissement.

2. Support selon la revendication 1,
**caractérisé en ce que** les parties de support des coquilles de palier des éléments de support de patin à glissement (12 à 14) fixées sur le câble porteur (17) sont fixées sur le câble porteur (17) par une liaison par blocs de serrage (21).

3. Support selon la revendication 1,
**caractérisé en ce que** les éléments de support de patin à glissement disposés de manière répartie sur chaque poste de support sur la région inférieure de la périphérie du tube rotatif, ou leurs parties de support, sont connectés les uns aux autres par le biais de portions de câble porteur.

4. Support selon la revendication 1,
**caractérisé en ce que** le dispositif (22) pour tendre ou tendre ultérieurement le câble porteur (17) se compose d'une bielle retenant l'extrémité libre (18) du câble porteur qui est supportée contre la base (16) par le biais d'une articulation (23) avec un axe d'articulation essentiellement parallèle au tube rotatif supporté (10).

5. Support selon la revendication 4,
**caractérisé en ce que** la bielle pour retenir et tendre ultérieurement l'extrémité libre (18) du câble porteur se compose d'un levier à deux bras dont le bras de levier plus court (24) vient en prise sur l'extrémité libre (18) du câble porteur et avec le bras de levier plus long (25) duquel vient en prise un dispositif de réglage (26) tel qu'un vérin de basculement hydraulique, etc.

6. Support selon la revendication 4,
**caractérisé en ce que** la bielle pour retenir et tendre ultérieurement l'extrémité libre (18) du câble porteur se compose d'un levier à un seul bras, sur le bras de levier (27) duquel l'élément de support de patin à glissement (14) se trouvant à l'extérieur est supporté.

7. Support selon l'une ou plusieurs des revendications 1 à 6,
**caractérisé en ce que** le câble porteur (17) se compose d'un faisceau de câbles de plus petit diamètre et/ou d'une chaîne à maillons et/ou de portions de tiges de traction.
